# EUROPÄISCHE PATENTANMELDUNG

(11) **EP 2 666 437 A1**
(43) Veröffentlichungstag der Anmeldung: **27.11.2013**
(21) Anmeldenummer: 12168613.3
(22) Anmeldetag: 21.05.2012
(51) Int. Cl.: A61C 8/00, A61C 13/265

(54) **Retentionseinsatz und Verbindungsvorrichtung für dentale Applikationen**

(71) Anmelder: Bächler, Jürg, 4434 Hölstein (CH); Bächler, Martin, 4436 Oberdorf (CH)
(72) Erfinder: Bächler, Martin, 4411 Seltisberg (CH); Bächler, Jürg, 4434 Hölstein (CH); Schaffner, Roland, 4410 Liestal (CH)
(74) Vertreter: Latscha, Silvan

(57) **Zusammenfassung**

Ein Retentionseinsatz (1) zum Verbinden einer dentalen Prothesenkonstruktion mit einer dentalen Implantat- beziehungsweise Überkappungskonstruktion, die einen für eine Druckknopfverbindung ausgestalteten Kopf aufweist, umfasst eine im Wesentlichen kreisscheibenförmige Endseite (12) und einen von der Endseite (12) abstehenden im Wesentlichen ringförmigen Retentionsrand (11) mit einer Außenfläche (114). Die Endseite (12) weist eine Öffnung (121) auf und es erstreckt sich ein im Wesentlichen axialer Schlitz (14) von einem der Endseite (12) abgewandten Ende (116) des Retentionsrandes (11) durch den Retentionsrand (11) und die Endseite (12) hindurch bis zur Öffnung (121) der Endseite (12). Der mit der Öffnung der Endseite verbundene Schlitz des erfindungsgemäßen Retentionseinsatzes ermöglicht als verhältnismäßig einfache Konstruktion, dass der Retentionseinsatz und insbesondere sein Retentionsrand eine zum Aufschnappen auf den Kopf beziehungsweise Patrizenkopf ausreichende Elastizität aufweist. Zugleich kann damit eine Federkraft vom aufgeschnappten Retentionsrand auf den Kopf wirken, so dass der Retentionseinsatz und damit verbundene Teile auf dem Kopf geklemmt sind. Weiter ermöglicht dieser Retentionsrand und diese Öffnung auch, dass Ungenauigkeiten in der Lage der Implantatkonstruktion und insbesondere Disparallelitäten sowie auch Krafteinwirkungen aus unterschiedlichen Richtungen ausgeglichen werden können, ohne dass der Retentionseinsatz oder Teile davon wesentlich gequetscht oder ähnlich deformiert wird.

## Beschreibung

### Technisches Gebiet

Die Erfindung betrifft einen Retentionseinsatz gemäß dem Oberbegriff des unabhängigen Patentanspruchs 1 und eine zugehörige Verbindungsvorrichtung.

Retentionseinsätze mit einer im Wesentlichen kreisscheibenförmigen Endseite und einem von der Endseite abstehenden im Wesentlichen ringförmigen Retentionsrand mit einer Außenfläche, wobei die Endseite und der Retentionsrand ein Aufnahme mit einer Innenfläche bilden, die korrespondierend zu einer Außenfläche eines Kopfs einer dentalen Implantat- beziehungsweise Überkappungskonstruktion ausgestaltet ist, so dass der Retentionseinsatz durch Anordnen des Kopfs in der Aufnahme auf den Kopf aufschnappbar ist, können zum Verbinden einer dentalen Prothesenkonstruktion mit der dentalen Implantat- beziehungsweise Überkappungskonstruktion eingesetzt werden.

### Stand der Technik

In der Zahnmedizin werden heute regelmäßig beschädigte beziehungsweise kranke Zähne durch einen künstlichen Zahnersatz ersetzt. Dabei werden häufig Implantate als Zahnwurzelersatz in einen Kieferknochen eines Patienten eingepflanzt. Auf das Implantat wird dann teilweise ein Abutment aufgesetzt, wobei das Abutment an seinem dem Implantat abgewandten Längsende oder das Implantat selbst mit einer Verbindungsstruktur ausgestaltet ist, an der eine Prothesenkonstruktion montiert werden kann. In einer verbreiteten Ausführung ist diese Verbindungsstruktur als Druckknopfverbindung ausgestaltet, wobei typischerweise ein männliches Teil der Druckknopfverbindung also die Patrize am Abutment beziehungsweise Implantat ausgestaltet ist und ein weibliches Teil der Druckknopfverbindung also die Matrize mit der Prothesenkonstruktion verbunden ist.

In der WO 2010/025034 A1 ist beispielsweise eine dentale Verankerungsvorrichtung beschrieben, die einen am Abutment oder direkt am Implantat ausgestalteten Patrizenkopf umfasst sowie ein Matrizengehäuse, das mit der Prothesenkonstruktion fest verbunden wird. Die Matrize umfasst weiter einen Retentionseinsatz, der in das Matrizengehäuse eingesetzt wird, bevor die Matrize zusammen mit der Prothesenkonstruktion auf den Patrizenkopf aufgeschnappt wird. Der Patrizenkopf weist ein flaches Kopfende und eine konvex nach außen gekrümmte Außenfläche als Einschnappfläche auf. Im flachen Kopfende ist eine Öffnung mit einem Innenprofil in den Patrizenkopf eingelassen, durch die einerseits ein Schraubwerkzeug zum Schrauben des Abutments beziehungsweise des Implantats angreifen kann und andererseits ein Stempel beziehungsweise Stopfen des Retentionseinsatzes klemmen kann.

Ein anderes Druckknopfverbindungssystem ist in der WO 2011/027229 A2 beschrieben. Dabei ist die Matrize unter anderem so weitergebildet, dass der Retentionseinsatz über einen Verriegelungsmechanismus fest mit dem Matrizengehäuse verbunden ist, wenn die Matrize auf die Patrize aufgeschnappt ist. Weiter weist der Retentionseinsatz einen Retentionsrand mit mehreren Lamellen zum Gewährleisten einer für das Aufschnappen auf den Patrizenkopf ausreichenden Elastizität sowie für ein Ausgleichen bei ungleichen Krafteinwirkungen auf die Matrize beispielsweise bei Kaubewegungen. Mit der Ausgestaltung der Lamellen des Retentionsrandes kann auch die Abzug- beziehungsweise Haltekraft des Retentionseinsatzes und somit einer darüber verbundenen Prothesenkonstruktion bestimmt werden.

Aufgabe der nachfolgenden Erfindung ist es, einen alternativen Retentionseinsatz beziehungsweise eine alternative für ein Druckknopfverbindungssystem geeignete Verbindungsvorrichtung vorzuschlagen, die ein effizientes langlebiges Verbinden einer Prothesenkonstruktion mit einem Kieferknochen ermöglichen sowie eine zuverlässige Handhabung bei der Montage und Demontage der Prothesenkonstruktion.

### Darstellung der Erfindung

Die Aufgabe wird erfindungsgemäß durch einen Retentionseinsatz gelöst, wie er im unabhängigen Anspruch 1 definiert ist, sowie durch eine Verbindungsvorrichtung, wie sie im unabhängigen Anspruch 9 definiert ist. Vorteilhafte Ausführungsvarianten der Erfindung ergeben sich aus den abhängigen Ansprüchen.

Das Wesen der Erfindung besteht im Folgenden: Ein Retentionseinsatz zum Verbinden einer dentalen Prothesenkonstruktion mit einer dentalen Implantatbeziehungsweise Überkappungskonstruktion, die einen für eine Druckknopfverbindung ausgestalteten Kopf aufweist, umfasst eine im Wesentlichen kreisscheibenförmige Endseite und einen von der Endseite abstehenden im Wesentlichen ringförmigen Retentionsrand mit einer Außenfläche. Die Endseite und der Retentionsrand bilden eine Aufnahme mit einer Innenfläche, die korrespondierend zu einer Außenfläche des Kopfs der dentalen Implantat- beziehungsweise Überkappungskonstruktion ausgestaltet ist, so dass der Retentionseinsatz durch Anordnen des Kopfs der Implantat- beziehungsweise Überkappungskonstruktion in der Aufnahme des Retentionseinsatzes auf den Kopf der Implantat- beziehungsweise Überkappungskonstruktion aufschnappbar ist. Die Endseite weist eine Öffnung auf und ein im Wesentlichen axialer Schlitz erstreckt sich von einem der Endseite abgewandten Ende des Retentionsrands durch den Retentionsrand und die Endseite hindurch bis zur Öffnung der Endseite.

Unter dem Begriff "axial" im Zusammenhang mit dem Schlitz wird eine Längsachse des Retentionseinsatzes verstanden, die sich von der Endseite in Richtung des der Endseite abgewandten Ende des Retentionsrandes erstreckt. Bei einer ebenen Endseite kann die Längsachse typischerweise rechtwinklig zur Endseite ausgestaltet sein und sich zentral durch den Retentionseinsatz erstrecken. Üblicherweise wird im Betrieb zum Aufschnappen der Kopf der Implantat- beziehungsweise Überkappungskonstruktion entlang der Längsachse in die Aufnahme des Retentionseinsatzes eingeführt.

Unter dem Begriff "Implantat- beziehungsweise Überkappungskonstruktion" wird im Zusammenhang mit der Erfindung eine beliebige Konstruktion verstanden, die mit dem Kieferknochen fest verbunden ist und die Mittel zur lösbaren Befestigung der Prothesenkonstruktion umfasst. Insbesondere können darunter einteilige Implantat beispielsweise mit einem Patrizenkopf, entsprechende Implantat-Abutment-Kombinationen oder überkappte Zähne verstanden werden. Im Folgenden werden jeweils überkappte Zähne nicht immer explizit erwähnt, sie sind aber jeweils als Alternative mitumfasst, wenn Implantatkonstruktionen erwähnt sind.

Unter dem Begriff "Prothesenkonstruktion" werden in diesem Zusammenhang verschiedene je nach Einsatz geeignete Konstruktionen verstanden, wie sie beispielsweise als Einzel-, Teil- oder Ganzzahnersatz, Brücke, Krone, Hybrid- oder Vollprothese bekannt sind.

Der Kopf der dentalen Implantat- beziehungsweise Überkappungskonstruktion kann insbesondere ein Patrizenkopf einer Druckknopfverbindung sein. Solche Patrizenköpfe können typischerweise einen Einschnappabschnitt umfassen, der korrespondierend zu einer Matrize und insbesondere zu einer Aufnahme deren Retentionseinsatzes ausgestaltet sein.

Die Endseite bildet in Anwendung des Retentionseinsatzes üblicherweise ein okklusales Ende des Retentionseinsatzes. Demgegenüber bildet das der Endseite abgewandte Ende in Anwendung des Retentionseinsatzes üblicherweise ein apikales Ende des Retentionseinsatzes.

Die Teile der gesamten Prothesen- und Implantateinrichtung, die in Anwendung die Gingiva beziehungsweise das Zahnfleisch zum Mundraum hin überragen und somit von außen sichtbar sind, können als Suprastruktur bezeichnet werden. Beispielsweise kann die Suprastruktur die Prothesenkonstruktion, eine Matrize einer Druckknopfverbindung, die den Retentionseinsatz und ein Matrizengehäuse beziehungsweise eine Halteschale umfassen kann, bei einer zweiteiligen Ausführung der Implantatkonstruktion ein Abutment oder zumindest Teile sowie insbesondere eine Patrize der Druckknopfverbindung umfassen.

Der mit der Öffnung der Endseite verbundene Schlitz des erfindungsgemäßen Retentionseinsatzes ermöglicht als verhältnismäßig einfache Konstruktion, dass der Retentionseinsatz und insbesondere sein Retentionsrand eine zum Aufschnappen auf den Kopf beziehungsweise Patrizenkopf ausreichende Elastizität aufweist. Zugleich kann damit beim aufgeschnappten Retentionseinsatz eine Federkraft vom Retentionsrand auf den Kopf wirken, so dass der Retentionseinsatz und damit verbundene Teile auf dem Kopf geklemmt sind. Weiter kann sich der Retentionsrand des Retentionseinsatzes federnd wieder in seine ursprüngliche Position zurückbewegen, nachdem er vom Kopf entfernt ist, so dass der Retentionseinsatz verhältnismäßig wenig beansprucht wird und eine verhältnismäßig hohe Lebensdauer haben kann. Schließlich ermöglicht dieser Retentionsrand und diese Öffnung auch, dass Ungenauigkeiten in der Lage der Implantatkonstruktion und insbesondere Disparallelitäten sowie auch Krafteinwirkungen aus unterschiedlichen Richtungen ausgeglichen werden können, ohne dass der Retentionseinsatz oder Teile davon wesentlich gequetscht oder ähnlich deformiert wird.

Vorzugsweise ist der Schlitz des Retentionseinsatzes im Wesentlichen gerade ausgestaltet. Damit kann der Schlitz beziehungsweise der Retentionseinsatz auf verhältnismäßig einfache Weise hergestellt sein. Insbesondere kann der Schlitz auch im Wesentlichen parallel zur Längsachse des Retentionseinsatzes verlaufen beziehungsweise rechtwinklig zur Endseite den Retentionsrand durchschneiden. Alternativ dazu kann der Schlitz auch aufweitend und/oder schräg ausgestaltet sein und/oder er kann sich spiralförmig entlang des Retentionsrandes in Richtung Endseite erstrecken. Der Retentionseinsatz kann auch mehrere Schlitze aufweisen.

In einer bevorzugten Ausgestaltung ist die Öffnung der Endseite als Bohrung ausgestaltet. Dabei beschreibt die Bohrung vorzugsweise einen im Wesentlichen kreisförmigen Querschnitt. Dies ermöglicht eine einfache und zweckmäßige Herstellung des Retentionseinsatzes. Die Endseite des Retentionseinsatzes kann auch mehrere Öffnungen aufweisen, insbesondere wenn mehrere Schlitze vorgesehen sind.

In einer anderen bevorzugten Ausgestaltung ist die Öffnung der Endseite schlitzförmig ausgestaltet. Dies ermöglicht eine alternative einfache und zweckmäßige Herstellung des Retentionseinsatzes. Beispielsweise bei einer Ausgestaltung mit einem oder mehreren schrägen beziehungsweise spiralförmigen Schlitzen ermöglicht ein Vorsehen von entsprechend einer oder mehreren schlitzförmigen Öffnungen in der Endseite des Retentionseinsatzes eine verhältnismäßig einfache und zweckmäßige Konstruktion.

Vorzugsweise weist der Retentionsrand des Retentionseinsatzes einen im Wesentlichen radial von der Außenfläche abstehenden Vorsprung auf. Dieser Vorsprung kann sich insbesondere entlang des im Wesentlichen gesamten Umfangs des Retentionsrandes erstrecken. Mit einem solchen Vorsprung kann verhältnismäßig einfach erreicht werden, dass der Retentionseinsatz fest mit einem Matrizengehäuse beziehungsweise einer Halteschale verbunden ist, wenn der Retentionseinsatz im Matrizengehäuse beziehungsweise in der Halteschale angeordnet ist. Insbesondere kann der Vorsprung als Teil eines Verriegelungsmechanismus bewirken, dass der Retentionseinsatz in der Halteschale beziehungsweise dem Matrizengehäuse verblockt werden kann. Beim auf diese Weise verblockten Retentionseinsatz kann die erfindungsgemäße Ausgestaltung mit einem Schlitz und einer Öffnung in der Endseite ermöglichen, dass trotz der festen Verbindung des Retentionseinsatzes in der Halteschale beziehungsweise im Matrizengehäuse ausreichende Flexibilität vorhanden ist, um nicht axial auftretenden Kräfte aufzunehmen und auszugleichen. Damit kann der Retentionseinsatz insbesondere für Anwendungen mit einem solchen Verriegelungsmechanismus eine langlebige und komfortable Handhabung ermöglichen.

Vorzugsweise weist der Retentionsrand des Retentionseinsatzes eine der Außenfläche entgegengesetzte Innenfläche auf, die gegen das der Endseite abgewandte Ende des Retentionseinsatzes hin abgerundet ausgestaltet ist. Mit einer so abgerundeten Ausgestaltung des Retentionsrandes kann erreicht werden, dass zum Einen die Verbindungsvorrichtung beim Aufsetzen auf den männlichen Teil der Druckknopfverbindung beziehungsweise den Kopf der Implantatkonstruktion zentriert wird sowie dass zum Anderen bei diesem Aufsetzen kontinuierlich eine Kraft auf den Retentionsrand aufgebracht wird. Diese Kraft bleibt auch nach erfolgtem Aufsetzen erhalten, so dass der Retentionsrand vom Kopf nach außen gedrückt und bewegt ist und dadurch eine unlösbare beziehungsweise feste Verbindung zwischen Retentionseinsatz und Halteschale beziehungsweise Matrizengehäuse möglich ist.

Vorzugsweise ist der Retentionseinsatz aus einem biokompatiblen polymeren Material insbesondere aus einem Polyetheretherketon hergestellt. Andere mögliche biokompatible Materialien sind Polyamide wie beispielsweise Polyhexamethylenadipinsäureamid. Solche Retentionseinsätze können auf einfache Weise hergestellt werden. Weiter erlauben solche Retentionseinsätze auch den Einsatz in der ganzheitlichen Medizin, bei der spezifische Anforderungen an die Materialien gestellt werden und insbesondere die Verwendung von Titan nicht zugelassen werden.

Ein weiterer Aspekt der Erfindung betrifft eine Verbindungsvorrichtung zum Verbinden einer dentalen Prothesenkonstruktion mit einer dentalen Implantatbeziehungsweise überkappungskonstrucktion. Die Verbindungsvorrichtung umfasst eine Halteschale mit einer Endseite und einem davon abstehenden im Wesentlichen ringförmigen Halterand sowie einen Retentionseinsatz, wie er oben beschrieben ist. Der Halterand und die Endseite der Halteschale bilden dabei eine Aufnahme, in der der Retentionseinsatz so anordbar ist, dass eine Außenfläche des Retentionsrandes des Retentionseinsatzes zumindest teilweise beabstandet benachbart zu einer Innenfläche des Halterandes der Halteschale liegt, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken.

Die Verbindungsvorrichtung kann insbesondere als weibliches Teil beziehungsweise Matrize einer Druckknopfverbindung vorgesehen sein. Dabei bezieht sich der Begriff "Halteschale" insbesondere auf ein Gehäuse der Matrize beziehungsweise auf ein Matrizengehäuse. Die Außenfläche des Retentionsrandes und die Innenfläche des Halterandes können irgendeine geeignete Form aufweisen wie beispielsweise eine im Wesentlichen ebene Form oder eine im Wesentlichen gebogene Form. Die Halteschale kann in Anwendung der Verbindungsvorrichtung fest mit der Prothesenkonstruktion verbunden sein, wobei sie beispielsweise dazu in einen Prothesenkunststoff eingegossen sein kann. Um eine zweckmäßige Verbindung mit der Prothesekonstruktion zu ermöglichen, kann die Halteschale auch geeignete Mittel wie eine oder mehrere Kerben auf ihrer Außenseite aufweisen. Die Endseite der Halteschale kann im Wesentlichen kreisscheibenförmig und mit einer Öffnung versehen oder insbesondere durchgängig geschlossen ausgestaltet sein. Der Halterand kann im Wesentlichen rechtwinklig vom Umfang der Endseite der Halteschale abstehen.

Indem die benachbarten Außenfläche des Retentionsrandes und Innenfläche des Halterandes zumindest teilweise nicht aneinander anliegend sondern beabstandet voneinander angeordnet sind, wenn im Wesentlichen keine radialen Kräfte auf den Halterand der Halteschale und auf den Retentionsrand des Retentionseinsatzes wirken, kann unter anderem erreicht werden, dass der Retentionseinsatz verhältnismäßig lose mit der Halteschale verbunden ist, wenn die Verbindungsvorrichtung noch nicht auf den Kopf der Implantatkonstruktion aufgesetzt ist. Dabei reicht diese lose Verbindung zweckmäßigerweise aus, dass der Retentionseinsatz in der Halteschale gehalten ist, um damit eine komfortable Handhabung zu ermöglichen. Diese lose Verbindung kann auch ermöglichen, dass der Retentionseinsatz verhältnismäßig leicht von der Halteschale entnommen und in die Halteschale eingesetzt werden kann, ohne dass er dazu wesentlich deformiert und auf andere Weise beansprucht werden muss. Somit ist ein schonendes Einsetzen und Entnehmen des Retentionseinsatzes möglich, was die Flexibilität und die Langlebigkeit der Verbindungseinrichtung verbessern kann.

Ist die Verbindungsvorrichtung bestimmungsgemäß mit der Implantatkonstruktion verbunden, so dass der Kopf der Implantatkonstruktion in den Retentionseinsatz eingeführt beziehungsweise eingeschnappt ist, so können radiale Kräfte vom Kopf auf den Retentionsrand des Retentionseinsatzes wirken. Diese Kräfte können den Retentionsrand in Richtung des Halterandes der Halteschale drücken, so dass der Retentionsrand in Richtung Halterand bewegt ist. Dabei kann er aufgrund des Schlitzes und der Öffnung federnd in Richtung Halterand bewegt sein, ohne dass er wesentlich gequetscht oder ähnlich deformiert wird. Auf diese Weise kann der Retentionseinsatz fest mit der Halteschale verbunden sein, wenn die Prothesenkonstruktion mittels der Verbindungsvorrichtung mit der Implantatkonstruktion verbunden ist. Zugleich kann die oben erwähnte Federkraft vom bewegten Retentionsrand auf den Kopf wirken, so dass die Verbindungsvorrichtung auf dem Kopf geklemmt ist.

Vorzugsweise ist die Außenfläche des Retentionsrandes des Retentionseinsatzes zumindest teilweise beabstandet benachbart von der Innenfläche des Halterandes der Halteschale angeordnet, indem die Außenfläche des Retentionsrandes des Retentionseinsatzes zumindest teilweise stärker in Richtung einer zentralen Achse der Verbindungsvorrichtung geneigt ist als die Innenfläche des Halterandes der Halteschale. In diesem Zusammenhang entspricht die "zentrale Achse" der im Wesentlichen senkrecht auf die jeweilige Endseite stehenden Mittelachse oder Längsachse der Halteschale beziehungsweise des Retentionseinsatzes, wobei sie insbesondere senkrecht durch den Mittelpunkt der jeweiligen Endseite verlaufen kann, wenn diese beispielsweise im Wesentlichen kreisscheibenförmig ausgestaltet sind. Unter dem Begriff "in Richtung der zentralen Achse der Verbindungsvorrichtung geneigt" bezieht sich in diesem Zusammenhang auf eine Neigung der Außenfläche des Retentionsrandes beziehungsweise der Innenfläche des Halterandes in Bezug auf die zugehörige Endseite. Diese Neigung kann mit einem Winkel zwischen der Außenfläche des Retentionsrandes beziehungsweise der Innenfläche des Halterandes und der zugehörigen Endseite korrelieren, wobei in diesem Fall erfindungsgemäß der Winkel zwischen der Außenfläche des Retentionsrandes und der zugehörigen Endseite kleiner ist als der Winkel zwischen der Innenfläche des Halterandes und der zugehörigen Endseite. Die erwähnte stärkere Neigung der Außenfläche des Retentionsrandes im Vergleich zu der Neigung der Innenfläche des Halterandes kann dazu führen, dass ein Abstand zwischen der Außenfläche des Retentionsrandes und der Innenfläche des Halterandes ausgebildet ist, der von den Endseiten ausgehend zunehmen kann. Somit sind die benachbarten Außenfläche des Retentionsrandes und Innenfläche des Halterandes zumindest teilweise nicht aneinander anliegend sondern beabstandet voneinander angeordnet, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken.

Bevorzugt weist der Retentionsrand des Retentionseinsatzes einen radial von der Außenfläche des Retentionsrandes des Retentionseinsatzes abstehenden Vorsprung auf und der Halterand der Halteschale eine entsprechende sich von der innenfläche des Halterandes der Halteschale radial erstreckende Nut. Dabei kann sich die Nut insbesondere entlang des im Wesentlichen gesamten Umfangs des des Halterandes erstrecken. Mit einem solchen Vorsprung und einer solchen entsprechenden Nut kann verhältnismäßig einfach erreicht werden, dass der Retentionseinsatz fest mit der Halteschale verbunden beziehungsweise verblockt ist, wenn der Retentionseinsatz in der Aufnahme der Halteschale angeordnet ist und eine radiale Kraft auf den Halterand der Halteschale und/oder auf den Retentionsrand des Retentionseinsatzes wirkt.

Dabei ist der Vorsprung des Retentionsrandes des Retentionseinsatzes vorzugsweise so in der Nut des Halterandes der Halteschale anordbar, dass der Retentionseinsatz lösbar in der Halteschale gehalten ist, wenn der Retentionseinsatz in der Aufnahme der Halteschale angeordnet ist und wenn im wesentlichen keine radialen Kräfte auf den Halterand der Halteschale und auf den Retentionsrand des Retentionseinsatzes wirken. Insbesondere kann auf diese Weise der Vorsprung nur zum Teil in der Nut angeordnet sein, wenn im Wesentlichen keine radialen Kräfte auf den Halterand der Halteschale und auf den Retentionsrand des Retentionseinsatzes wirken, so dass der Retentionseinsatz genügend fest in der Halteschale gehalten ist, damit er darin gehalten ist aber trotzdem lose genug, damit er einfach aus der Halteschale entfernt werden kann.

Der Vorsprung des Retentionsrandes des Retentionseinsatzes umfasst vorzugsweise eine im Wesentlichen ebene Vorsprungauflagefläche und die Nut des Halterandes der Halteschale eine im Wesentlichen ebene Nutauflagefläche, wobei ein Teil der Vorsprungauflagefläche an einem Teil der Nutauflagefläche anliegt, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken, und wobei die Nutauflagefläche gegen ihr dem Retentionseinsatz zugewandtes Ende hin und/oder die Vorsprungauflagefläche gegen ihr der Halteschale zugewandtes Ende hin abgerundet ausgestaltet ist. Insbesondere kann dabei die Nutauflagefläche von der Vorsprungauflagefläche weg abgerundet ausgestaltet sein beziehungsweise die Vorsprungauflagefläche von der Nutauflagefläche weg. Die Vorsprungauflagefläche des Vorsprungs des Retentionseinsatzes kann insbesondere im Wesentlichen der Endseite des Retentionseinsatzes abgewandt ausgestaltet sein und die Nutauflagefläche der Nut der Halteschale insbesondere im Wesentlichen der Endseite der Halteschale zugewandt. Mit einer solchen abgerundeten Nut- beziehungsweise Vorsprungauflagefläche, kann eine zweckmäßige tragende aber trotzdem einfach lösbare Verbindung zwischen Retentionseinsatz und Halteschale realisiert sein.

Vorzugsweise ist der Vorsprung des Retentionsrandes des Retentionseinsatzes so in der Nut des Halterandes der Halteschale anordbar, dass der Retentionseinsatz unlösbar mit der Halteschale verbunden ist, wenn der Retentionseinsatz in der Aufnahme der Halteschale angeordnet ist und wenn eine radiale Kraft auf den Retentionsrand des Retentionseinsatzes in Richtung des Halterandes der Halteschale und/oder auf den Halterand der Halteschale in Richtung des Retentionsrandes des Retentionseinsatzes wirkt. Beispielsweise kann, wenn eine Kraft auf den Halterand in Richtung des Retentionsrandes und/oder insbesondere eine Kraft auf den Retentionsrand in Richtung des Halterandes wirkt, der Halterand und der Retentionsrand so zueinander bewegt sein, dass der Vorsprung weiter oder vollständig in der Nut angeordnet ist und der Retentionseinsatz damit unlösbar beziehungsweise fest mit der Halteschale verbunden beziehungsweise verblockt ist. Die radiale Kraft kann insbesondere durch den Kopfs der Implantatkonstruktion auf den Retentionsrand aufgebracht beziehungsweise gehalten werden.

Vorzugsweise ist die Halteschale aus einem biokompatiblen polymeren Material insbesondere aus einem Polyetheretherketon hergestellt. Andere mögliche biokompatible Materialien sind Polyamide wie beispielsweise Polyhexamethylenadipinsäureamid. Solche Verbindungsvorrichtungen können auf einfach Weise hergestellt werden. Weiter ist es mögliche insbesondere auch die Halteschalen aus einem hellen und möglichst zahnfleischfarbigen Material herzustellen, was ermöglicht, dass die Verbindungsvorrichtung in einem Mund eines Patienten bevorzugt wenig gut sichtbar ist. Zudem erlaubten solchen Verbindungsvorrichtungen auch den Einsatz in der ganzheitlichen Medizin, bei der spezifische Anforderungen an die Materialien gestellt werden und insbesondere die Verwendung von Titan nicht zugelassen ist. Alternativ dazu kann die Halteschale aber auch aus Titan hergestellt sein.

### Kurze Beschreibung der Zeichnungen

Im Folgenden werden der erfindungsgemäße Retentionseinsatz und die erfindungsgemäße Verbindungsvorrichtung unter Bezugnahme auf die beigefügten Zeichnungen anhand von Ausführungsbeispielen detaillierte beschrieben. Es zeigen:
- Fig. 1: eine perspektivische Ansicht eines Ausführungsbeispiels eines erfindungsgemäßen Retentionseinsatzes;
- Fig. 2: eine seitliche Schnittansicht des Retentionseinsatzes der Fig. 1; und
- Fig. 3: eine seitliche Schnittansicht eines Ausführungsbeispiels einer erfindungsgemäßen Verbindungsvorrichtung mit dem Retentionseinsatz von Fig. 1 und einem Matrizengehäuse als Halteschale.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach außen" bezeichnen Richtungen hin zum oder weg vom geometrischen Mittelpunkt der dargestellten Einrichtungen sowie benannter Teile derselben. Die Terminologie umfasst die oben ausdrücklich erwähnten Wörter, Ableitungen von denselben und Wörter ähnlicher Bedeutung.

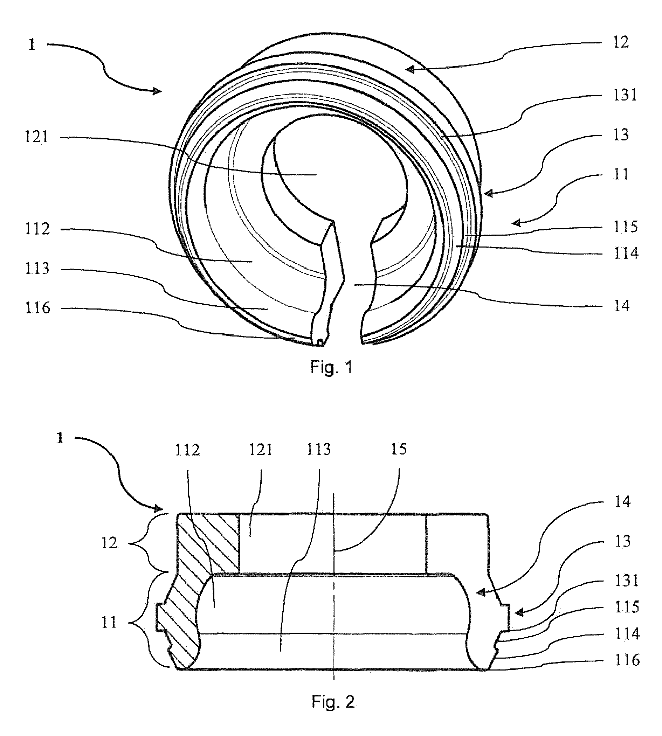

Fig. 1 zeigt ein erstes Ausführungsbeispiel eines erfindungsgemäßen Retentionseinsatzes 1 in einer perspektivischen Ansicht und Fig. 2 eine Schnittansicht des gleichen Retentionseinsatzes 1, wobei die Schnittebene mittig durch einen Schlitz 14 verläuft, so dass der Schlitz 14 rechts in der Fig. 2 dargestellt ist. Der im Wesentlichen topfförmige Retentionseinsatz 1 umfasst eine im Wesentlichen kreisscheibenförmige Endseite 12 und einen angewinkelt am Umfang davon abstehenden im Wesentlichen ringförmigen Retentionsrand 11. Der Retentionsrand 11 weist eine Außenfläche 114 und eine der Außenfläche 114 entgegengesetzte Innenfläche 112, wobei die Innenfläche 112 gegen das offene Ende des Retentionseinsatzes 1 also gegen das der Endseite 12 abgewandte Ende des Retentionseinsatzes 1 hin nach außen abgerundet ausgestaltet ist und somit einen entsprechenden gekrümmten Abschnitt 113 aufweist. Dabei weist die Innenfläche 112 einen oberen nach innen gekrümmten Abschnitt mit einem positiven Krümmungsradius auf, der in den nach außen gekrümmten Abschnitt 113 mit einem negativen Krümmungsradius übergeht. Die Innenfläche 112 des Retentionsrandes 11 bildet zusammen mit einer Innenfläche beziehungsweise unteren Fläche der Endseite 12 eine Aufnahme des Retentionseinsatzes 1. Am der Endseite 12 abgewandten Ende des Retentionsrandes 11 geht der nach außen gekrümmten Abschnitt 113 in einen ebenen Abschnitt 116 über, der das der Endseite 12 abgewandte Ende des Retentionseinsatzes 1 bindet. In Anwendung des Retentionseinsatzes 1 kann der ebene Abschnitt 116 ein dem apikalen Ende des Retentionseinsatzes 1 entsprechen.

Die Außenfläche 114 des Retentionsrandes 11 ist gegen das der Endseite 12 abgewandte Ende des Retentionseinsatzes 1 hin so angewinkelt zur Endseite 12 ausgestaltet, dass sie in Richtung einer zentralen Achse 15 des Retentionseinsatzes 1 nach innen geneigt ist.

Etwa in der Mitte des Retentionsrandes 11 ist ein radial von der Außenfläche 114 des Retentionsrandes 11 abstehender riegelförmiger Vorsprung 13 beziehungsweise Balken ausgestaltet, der sich über den ganzen Umfang des Retentionsrandes 11 erstreckt. Der Vorsprung 13 umfasst eine ebene radiale Außenseite, eine rechtwinklig dazu ausgestaltete ebene Oberseite, die der Endseite 12 zugewandt ist, und eine der Oberseite entgegengesetzte ebene Unterseite, die der Endseite 12 abgewandt ist und die eine Vorsprungauflagefläche 131 definiert. Wie in Fig. 2 gut ersichtlich ist, überragt der Vorsprung 13 den Rest des Retentionseinsatzes 1 radial nach außen hin.

In Richtung des der Endseite 12 abgewandten Endes des Retentionsrandes 11 ist eine Eingreifkerbe 115 benachbart zum Vorsprung 13 an der Außenfläche 114 ausgebildet. Über die Eingreifkerbe 115 kann der Retentionseinsatz 1 über ein geeignetes Montagewerkzeug, wie es beispielsweise in der WO 2011/027229 A2 beschrieben ist, gehalten werden. Damit kann der Retentionseinsatz 1 auf bevorzugte Weise montiert und manipuliert werden.

Die Endseite 12 weist eine zentralen kreisrunde Bohrung 121 als Öffnung auf. Der Schlitz 14 ist senkrecht zur Endseite 12 angeordnet und gerade ausgestaltet. Er erstreckt sich vom ebenen Abschnitt 116 des Retentionsrandes 11 durch den gesamten Retentionsrand 11 und die Endseite 12 hindurch bis zur Bohrung 121. Somit ist die Bohrung 121 mit dem offenen Ende des Retentionseinsatzes 1 durch den Schlitz 14 verbunden.

Der Retentionseinsatz 1 ist vollständig aus Polyetheretherketon hergestellt, wobei alternativ dazu auch ein anderes biokompatibles polymeres oder nicht polymeres Material möglich ist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

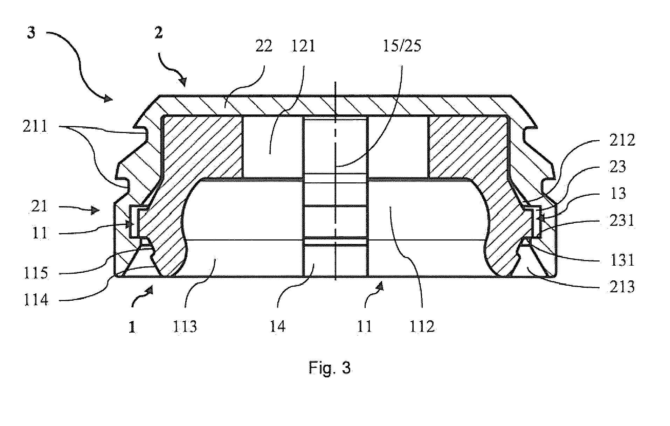

In Fig. 3 ist ein Ausführungsbeispiel einer Verbindungsvorrichtung 3 mit einem Matrizengehäuse 2 als Halteschale und dem Retentionseinsatz 1 im Querschnitt gezeigt, wobei die Schnittebene im Vergleich zur Fig. 2 um 90° um die Längsachse 15 des Retentionseinsatzes 1 gedreht ist, so dass der Schlitz 14 frontal dargestellt ist. Das im Wesentlichen topfförmige Matrizengehäuse 2 weist eine im Wesentlichen kreisscheibenförmige geschlossen Endseite 22 und einen angewinkelt am Umfang davon abstehenden im Wesentlichen ringförmigen Halterand 21 auf. Der Halterand 21 umfasst eine Innenfläche 212 und zwei an einer nach außen gewölbten Außenseite ausgestaltete Kerben 211, die auf verschiedenen Höhen angeordnet sind und die sich über den gesamten Umfang des Halterands 21 erstrecken. Die Innenfläche 212 des Halterandes 21 geht gegen das untere offene Ende des Matrizengehäuses 2 hin in einen nach außen geneigten Abschnitt 213 über. Von der Innenfläche 212 des Halterndes 21 her ist eine Nut 23 in den Halterand 21 eingelassen, die eine Innenfläche, eine rechtwinklig dazu ausgestaltete der Endseite 22 abgewandte Unterfläche und eine ebenfalls reuhtwin4cfig dazu ausgestaltete der Endseite 22 zugewandte Nutauflagefläche 231 umfasst. Das Matrizengehäuse 2 ist vollständig aus Polyetheretherketon hergestellt, wobei alternativ dazu auch ein anderes biokompatibles polymeres oder nicht polymeres Material mögliche ist wie beispielsweise Titan.

Der Retentionseinsatz 1 ist in Fig. 3 mit seiner Endseite 12 voraus durch die offene Seite des Matrizengehäuses 2 soweit in das Matrizengehäuse 2 eingeschoben, bis die Endseite 12 des Retentionseinsatzes 1 an der Endseite 22 des Matrizengehäuses 2 anlegt Der geneigte Abschnitt 213 der Innenfläche 212 des Halterandes 21 dient beim solchen Einschieben dazu, den Retentionseinsatz 1 in Bezug auf das Matrizengehäuse 2 zu zentrieren und zu führen. Die zentrale Achse 15 des Retentionseinsatzes 1 und eine zentralen Achse 25 des Matrizengehäuses 2 liegen an gleicher Stelle und bilden zusammen eine zentrale Achse der Verbindungsvorrichtung 3.

Zwischen der Innenfläche 212 des Halterandes 21 und der Außenfläche 112 des Retentionsrandes 11 ist ein nach unten beziehungsweise in Richtung der offenen Seite der Verbindungsvorrichtung 1 zunehmender Abstand zwischen dem Halterand 21 und dem Retentionsrand 11 angeordnet. Dieser Abstand ermöglicht, dass der Vorsprung 13 des Retentionseinsatzes 1 lediglich zu einem Teil in der Nut 23 des Matrizengehäuses 2 liegt. Damit ist der Retentionseinsatz 1 lösbar in im Matrizengehäuse 2 gehalten, die Verbindungsvorrichtung 1 bildet aber eine Einheit.

In Verwendung der Verbindungsvorrichtung 3 wird das Matrizengehäuse 2 fest an einer Prothesenkonstruktion montiert. Dazu kann es beispielsweise in einen Prothesenkunststoff eingegossen werden, wobei die Kerben 211 des Halterandes 21 zu einer sicheren festen Verbindung zwischen Matrizengehäuse 2 und Prothesenkonstruktion beitragen. Weiter wird eine Implantatkonstruktion mit einem für eine Druckknopfverbindung ausgestalteten Kopf beziehungsweise Patrizenkopf bestimmungsgemäß in einem Kieferknochen eingepflanzt. Vor der Verbindung der Prothesenkonstruktion mit der Implantatkonstruktion wird der Retentionseinsatz 1 axial in das Matrizengehäuse 2 eingeschoben bis der Retentionseinsatz 1 im Matrizengehäuse 2 angeordnet beziehungsweise gehalten ist. Dabei wird der Retentionseinsatz 1 über die Vorsprungauflagefläche 131 zwischen der Endseite 22 des Matrizengehäuse 2 und der Nutauflagefläche 231 des Matrizengehäuses 2 leicht eingeklemmt, so dass der Retentionseinsatz 1 im Matrizengehäuse 2 und somit der Prothesenkonstruktion gehalten ist.

Die Prothesenkonstruktion wird dann an der Implantatkonstruktion angeordnet, so dass der Kopf der Implantatkonstruktion am Retentionseinsatz 1 der Verbindungsvorrichtung 3 anliegt. Danach wird die Prothesenkonstruktion auf die Implantatkonstruktion aufgedrückt, so dass der Retentionseinsatz 1 axial auf den Kopf der Implantatkonstruktion gedrückt wird. Dabei wird die Verbindungsvorrichtung 3 durch den nach außen gekrümmten Abschnitt 113 des Retentionsrandes 11 zentriert. Zudem wirkt eine über diesen außen gekrümmten Abschnitt 113 zunehmende radiale Kraft auf den Retentionsrand 11, wodurch sich der Schlitz 14 und die Bohrung 121 des Retentionseinsatzes 1 aufweiten beziehungsweise wodurch der Retentionseinsatz 1 aufgespreizt wird. Dadurch wird der Retentionsrand 11 des Retentionseinsatzes 1 in Richtung des Halterandes 21 des Matrizengehäuses bewegt, so dass der Vorsprung 13 so in der Nut 23 angeordnet, dass der Retentionseinsatz 1 unlösbar mit dem Matrizengehäuse 2 verbunden beziehungsweise verblockt ist.

Bei auf die Implantatkonstruktion aufgesetzter Prothesenkonstruktion ist der Kopf der Implantatkanstruktion in die Verbindungsvorrichtung 3 eingeschnappt. Der Kopf ist dabei im mit positivem Krümmungsradius nach innen gekrümmten Abschnitt der Innenfläche 112 des Retentionsrandes 11 des Retentionseinsatzes 1 eingefasst, wobei er durch die in Richtung der zentralen Achse wirkenden durch die Bewegung des Retentionsrandes 11 induzierten elastischen beziehungsweise federnden Kräfte des Retentionsrandes 11 gehalten ist. Entsprechend ist der Kopf stärker gehalten, wenn diese elastischen Kräfte größer sind. Und diese elastischen Kräfte sind unter anderem abhängig vom Material aus dem der Retentionseinsatz 1 hergestellt ist und von der Ausgestaltung der Bohrung 121 und des Schlitzes 14 des Retentionseinsatzes 1.

Wie oben beschrieben ist mittels des Schlitzes 14 und der Bohrung 121 der Retentionseinsatz 1 in seinem Durchmesser elastisch veränderbar beziehungsweise aufspreizbar. Dies ermöglicht neben dem oben beschriebenen Aufklicken auf einen Kopf beziehungsweise Patrizenkopf auch, dass beim Einführen des Retentionseinsatzes 1 in das Matrizengehäuse 2 der Schlitz 14 und die Bohrung 121 kurzzeitig verengt und danach wieder ausgedehnt werden, so dass der Rententonseinsatz 1 einfach in das Matrizengehäuse 2 eingeklickt werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solchen, die zusätzliche andere Merkmale umfassen.

Im Weiteren schließt der Ausdruck "umfassen." und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schrift erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

**1.** Retentionseinsatz (1) zum Verbinden einer dentalen Prothesenkonstruktion mit einer dentalen Implantat- beziehungsweise Überkappungskonstruktion, die einen für eine Druckknopfverbindung ausgestalteten Kopf aufweist, umfassend
eine im Wesentlichen kreisscheibenförmige Endseite (12) und
einen von der Endseite (12) abstehenden im Wesentlichen ringförmigen Retentionsrand (11) mit einer Außenfläche (114),
wobei die Endseite (12) und der Retentionsrand (11) eine Aufnahme mit einer Innenfläche (112) bildern, die korrespondierend zu einer Außenfläche des Kopfs der dentalen Implantat- beziehungsweise Überkappungskonstruktion ausgestaltet ist, so dass der Retentionseinsatz (1) durch Anordnen des Kopfs der Implantat- beziehungsweise Überkappungskonstruktion in der Aufnahme des Retentionseinsatzes (1) auf den Kopf der Implantat- beziehungsweise Überkappungskonstruktion aufschnappbar ist,
**dadurch gekennzeichnet,**
**dass** die Endseite (12) eine Öffnung (121) aufweist und
**dass** sich ein im Wesentlichen axialer Schlitz (14) von einem der Endseite (12) abgewandten Ende (116) des Retentionsrandes (11) durch den Retentionsrand (11) und die Endseite (12) hindurch bis zur Öffnung (121) der Endseite (12) erstreckt.

**2.** Retentionseinsatz (1) nach Anspruch 1, bei dem der Schlitz (14) im Wesentlichen gerade ausgestaltet ist.

**3.** Retentionseinsatz (1) nach Anspruch 1 oder 2, bei dem die Öffnung (121) der Endseite (12) als Bohrung ausgestaltet ist.

**4.** Retentionseinsatz (1) nach Anspruch 3, bei der die Bohrung (121) einen im Wesentlichen kreisförmigen Querschnitt beschreibt.

**5.** Retentionseinsatz (1) nach Anspruch 1 oder 2, bei dem die Öffnung (121) der Endseite (12) schlitzförmig ausgestaltet ist.

**6.** Retentionseinsatz (1) nach einem der vorangehenden Ansprüche, bei dem der Retentionsrand (11) einen im Wesentlichen radial von der Außenfläche (114) abstehenden Vorsprung (13) aufweist.

**7.** Retentionseinsatz (1) nach einem der vorangehenden Ansprüche, bei dem der Retentionsrand (11) eine der Außenfläche (114) entgegengesetzte Innenfläche (112) aufweist, die gegen das der Endseite (12) abgewandte Ende (116) hin abgerundet ausgestaltet ist.

**8.** Retentionseinsatz (1) nach einem der vorangehenden Ansprüche, der aus einem biokompatibles polymeren Material insbesondere aus einem Polyetheretherketon hergestellt ist.

**9.** Verbindungsvorrichtung (3) zum Verbinden einer dentalen Prothesenkonstruktion mit einer dentalen Implantat- beziehungsweise Überkappungskonstruktion, die eine Halteschale (2) mit einer Endseite (22) und einem davon abstehenden im Wesentlichen ringförmigen Halterand (21) sowie einen Retentionseinsatz (1) gemäß einem der vorangehenden Ansprüche umfasst, wobei der Halterand (21) und die Endseite (22) der Halteschale (2) eine Aufnahme bilden, in der der Retentionseinsatz (1) so anordbar ist, dass eine Außenfläche (114) des Retentionsrandes (11) des Retentionseinsatzes (1) zumindest teilweise beabstandet benachbart zu einer Innenfläche (212) des Halterndes (21) der Halteschale (2) liegt, wenn der Retentionseinsatz (1) in der Aufnahme der Halteschale (2) angeordnet ist und wenn im Wesentlichen keine radialen Kräfte auf den Halterand (21) der Halteschale (2) und auf den Retentionsrand (11) des Retentionseinsatzes (1) wirken.

**10.** Verbindungsvorrichtung (3) nach Anspruch 9, bei der die Außenfläche (114) des Retentionsrandes (11) des Retentionseinsatzes (1) zumindest teilweise beabstandet benachbart von der Innenfläche (212) des Halterandes (21) der Halteschale (2) angeordnet ist, indem die Außenfläche (114) des Retentionsrandes (11) des Retentionseinsatzes (1) zumindest teilweise stärker in Richtung einer zentralen Achse (15, 25) der Verbindungsvorrichtung (3) geneigt ist als die Innenfläche (212) des Halterandes (21) der Halteschale (2).

**11.** Verbindungsvorrichtung (3) nach Anspruch 9 oder 10, bei der der Retentionsrand (11) des Retentionseinsatzes (1) einen radial von der Außenfläche (114) des Retentionsrandes (11) des Retentionseinsatzes (1) abstehenden Vorsprung (13) aufweist und der Halterand (21) der Halteschale (2) eine entsprechende sich von der Innenfläche (212) des Halterandes (21) der Halteschale (2) radial erstreckende Nut (23).

**12.** Verbindungsvorrichtung (3) nach Anspruch 11, bei der der Vorsprung (13) des Retentionsrandes (11) des Retentionseinsatzes (1) so in der Nut (23) des Halterandes (21) der Halteschale (2) anordbar ist, dass der Retentionseinsatz (1) lösbar in der Halteschale (2) gehalten ist, wenn der Retentionseinsatz (1) in der Aufnahme der Halteschale (2) angeordnet ist und wenn im Wesentlichen keine radialen Kräfte auf den Halterand (21) der Halteschale (2) und auf den Retentionsrand (11) des Retentionseinsatzes (1) wirken.

**13.** Verbindungsvorrichtung (3) nach Anspruch 11 oder 12, bei der der Vorsprung (13) des Retentionsrandes (11) des Retentionseinsatzes (1) eine im Wesentlichen ebene Vorsprungauflagefläche (131) und die Nut (23) des Halterandes (21) der Halteschale (2) eine im Wesentlichen ebene Nutauflagefläche (231) aufweisen, wobei ein Teil der Vorsprungauflagefläche (131) an einem Teil der Nutauflagefläche (231) anliegt, wenn der Retentionseinsatz (1) in der Aufnahme der Halteschale (2) angeordnet ist und wenn im Wesentlichen keine radialen Kräfte auf den Halterand (21) der Halteschale (2) und auf den Retentionsrand (11) des Retentionseinsatzes (1) wirken, und wobei die Nutauflagefläche (231) gegen ihr dem Retentionseinsatz (1) zugewandtes Ende hin und/oder die Vorsprungauflagefläche (131) gegen ihr der Halteschale (2) zugewandtes Ende hin abgerundet ausgestaltet ist.

**14.** Verbindungsvorrichtung (3) nach einem der Ansprüche 11 bis 13, bei der der Vorsprung (13) des Retentionsrandes (11) des Retentionseinsatzes (1) so in der Nut (23) des Halterandes (21) der Halteschale (2) anordbar ist, dass der Retentionseinsatz (1) unlösbar mit der Halteschale (2) verbunden ist, wenn der Retentionseinsatz (1) in der Aufnahme der Halteschale (2) angeordnet ist und wenn eine radiale Kraft auf den Retentionsrand (11) des Retentionseinsatzes (1) in Richtung des Halterandes (21) der Halteschale (2) und/oder auf den Halterand (21) der Halteschale (2) in Richtung des Retentionsrandes (11) des Retentionseinsatzes (1) wirkt.

**15.** Verbindungsvorrichtung (3) nach einem der Ansprüche 11 bis 14, bei der die Halteschale (2) aus einem biokompatibles polymeren Material insbesondere aus einem Polyetheretherketon hergestellt ist.
